(19) Europäisches Patentamt
European Patent Office
Office européen des brevets

(11) Publication number: **0 467 204 B1**

(12) # EUROPEAN PATENT SPECIFICATION

(45) Date of publication of patent specification: **28.12.94**

(51) Int. Cl.5: **A01N 43/68**, //(A01N43/68, 43:36,43:30)

(21) Application number: **91111455.1**

(22) Date of filing: **10.07.91**

(54) **Herbicidal compositions.**

(30) Priority: **20.07.90 JP 190554/90**

(43) Date of publication of application:
**22.01.92 Bulletin 92/04**

(45) Publication of the grant of the patent:
**28.12.94 Bulletin 94/52**

(84) Designated Contracting States:
**DE ES FR GB IT**

(56) References cited:
**EP-A- 0 411 153**
**US-A- 4 932 998**

(73) Proprietor: **IDEMITSU KOSAN COMPANY LIMITED**
**1-1, Marunouchi 3-chome**
**Chiyoda-ku**
**Tokyo 100 (JP)**

(72) Inventor: **Hirata, Toshihiro, c/o Idemitsu Kosan Company Ltd.**
**1280, Kamiizumi,**
**Sodegaura-machi**
**Kimitsu-gun,**
**Chiba-ken (JP)**
Inventor: **Kobayashi, Izumi, c/o Idemitsu Kosan Company Ltd.**
**1-1, Marunouchi 3-chome**
**Chiyoda-ku,**
**Tokyo (JP)**
Inventor: **Kikkawa, Nobuyuki, c/o Idemitsu Kosan Company Ltd.**
**1280, Kamiizumi,**
**Sodegaura-machi**
**Kimitsu-gun,**
**Chiba-ken (JP)**
Inventor: **Takematsu, Tetsuo**
**612, Mine-machi**
**Utsunomiya-shi,**
**Tochigi-ken (JP)**

(74) Representative: **Türk, Gille, Hrabal, Leifert**
**Brucknerstrasse 20**
**D-40593 Düsseldorf (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 467 204 B1

## Description

BACKGROUND OF THE INVENTION

FIELD OF THE INVENTION

The present invention relates to herbicidal composition comprising triazine derivatives and urea type herbicides as active ingredients.

STATEMENT OF THE PRIOR ART

Heretofore a variety of herbicides have been developed and have contributed to agricultural productivity and saving labor. However, some herbicides have been used over many years and hence, weeds which are insufficiently controlled are increasing. It was thus been desirable to develop herbicides with a wide herbicidal spectrum also against such troublesome weeds. Also in order to counter environmental pollution problems caused by conventional herbicides, it was desirable to develop herbicides having a high activity at low dosages. Moreover, in order to control weeds emerging non-uniformly over a long period of time, it was desirable to develop herbicides having excellent residual activities and flexibility of treatment, which are effective even though treatments are performed over a long period from pre-emergence to a wide range of growing stages of the weeds.

Under such conditions, the present inventors found that specific, novel triazine derivatives containing a halo alkyl are compounds which show a high herbicidal effect against troublesome weeds both by soil and by foliage treatment, without causing any phytotoxicity of Gramineae field crops, and moreover provide an excellent effectiveness against weeds in paddy fields (Japanese Patent Application Nos. 1-38178 and 1-154465). The present inventors made extensive investigations to further improve the herbicidal activity of the triazine derivatives.

As a result, it has been found that a composition comprising the triazine derivatives in combination with specific urea type herbicides exhibits excellent herbicidal activity which can be unexpected from each property of the herbicides and shows a high herbicidal effect at low dosages and at the same time, has a wide herbicidal spectrum.

The present invention has thus been accomplished.

SUMMARY OF THE INVENTION

The present invention provides a herbicidal composition comprising as active ingredients triazine derivatives represented by general formula [I]:

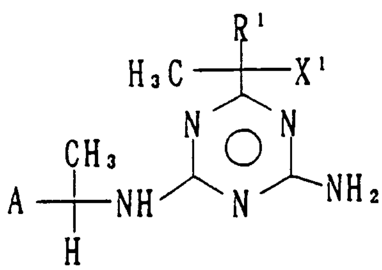

... [I]

[wherein A represents

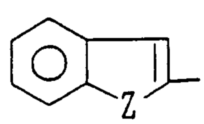

(wherein Z represents oxygen atom or sulfur atom), or

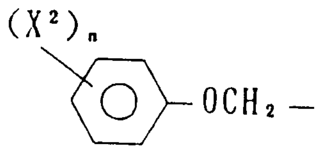

(wherein $X^2$ represents methyl group or fluorine atom and n represents 0 or an integer of 1 or 2); $R^1$ represents hydrogen atom or methyl group; and $X^1$ represents fluorine atom or chlorine atom] and a urea type herbicide represented by general formula [II]:

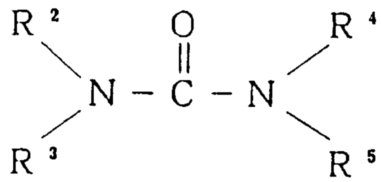 ··· [II]

[wherein $R^2$ represents a benzene ring or an aromatic heterocyclic group which may optionally be substituted, $R^3$ represents a hydrogen atom or a straight or branched alkyl group having 1 to 6 carbon atoms, $R^4$ represents a straight or branched alkyl group having 1 to 6 carbon atoms, $R^5$ represents a hydrogen atom or a straight or branched alkyl group or a branched alkoxy group, having 1 to 6 carbon atoms].

DETAILED DESCRIPTION OF THE INVENTION

Specific examples of the triazine derivatives represented by general formula [I] described above include:

2-amino-4-[1-(benzofuran-2'-yl)ethylamino]-6-(α-fluoro,α-methylethyl)-s-triazine

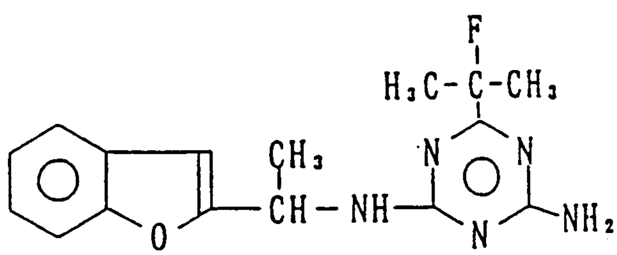 ,

2-amino-4-[1-(benzofuran-2'-yl)ethylamino]-6-(α-fluoroethyl)-s-triazine

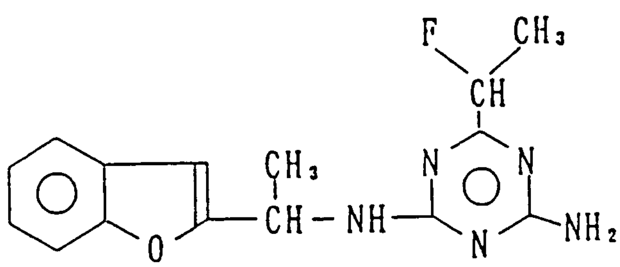 ,

2-amino-4-[1-(benzothiophen-2'-yl)ethylamino]-6-(α-fluoro,α -methylethyl)-s-triazine

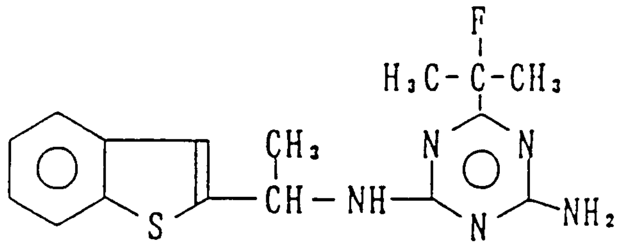

,

2-amino-4-(α-fluoro,α-methylethyl)-6-[2-(3' methylphenoxy)-1-methylethylamino]-s-triazine

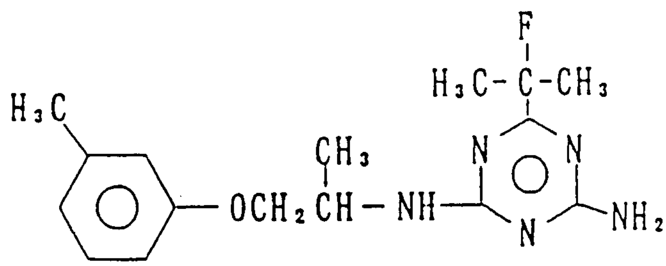

,

2-amino-4-(α-fluoro,α-methylethyl)-6-[2-(3'fluorophenoxy)-1-methylethylamino]-s-triazine

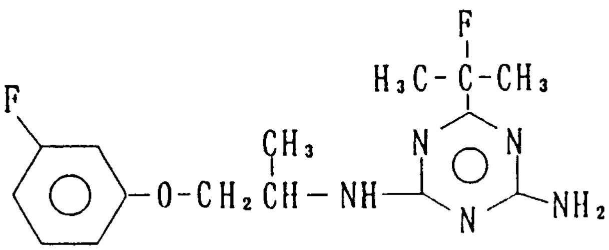

,

2-amino-4-(α-chloro,α-methylethyl)-6-[2-(3',5'-dimethylphenoxy)-1-methylethylamino]-s-triazine

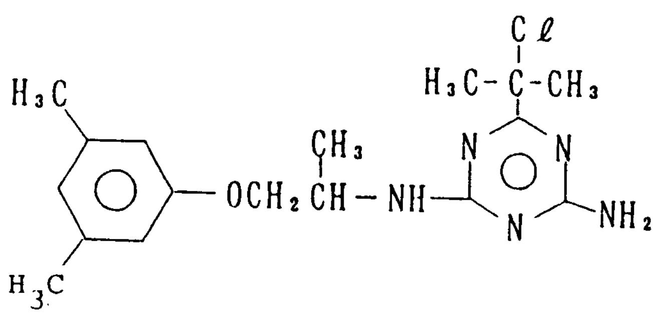

,

2-amino-4-(α-fluoro,α-methylethyl)-6-[2-(3',5'-dimethylphenoxy)-1-methylethylamino]-s-triazine

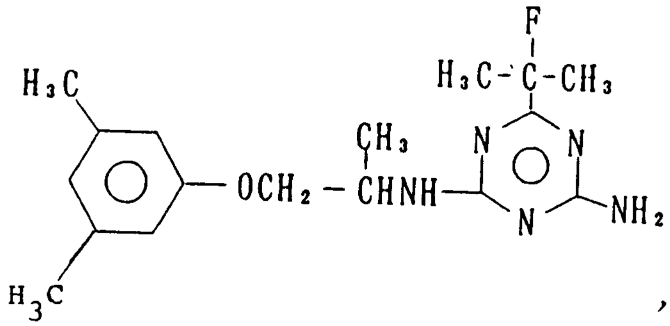

,

etc.

The triazine derivatives represented by general formula [I] described above may be prepared by various processes. Among these processes, an advantageous process comprises reacting alkyl amine salts represented by general formula [III]:

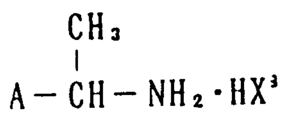

... [III]

[wherein A has the same significance as described above and $X^3$ represents a halogen atom] with cyanoguanidine represented by the following formula

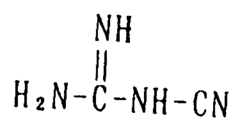

to prepare alkyl biguanide salts represented by general formula [IV]:

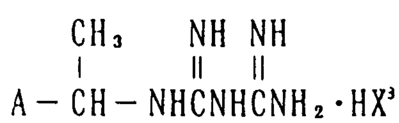

... [IV]

[wherein A and $X^3$ have the same significances as described above]; and then reacting the alkyl biguanide salts with alkyl esters represented by general formula [V]:

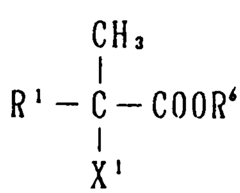

... [V]

[wherein $R^1$ and $X^1$ have the same significance as described above; and $R^6$ represents an alkyl group having 1 to 4 carbon atom]. According to this process, the desired triazine derivatives represented by general formula [I] can be efficiently obtained by reacting the alkylamine salts represented by general formula [III] with cyanoguanidine to prepare the alkyl biguanide salts represented by general formula [IV], and then reacting the salts [IV] with the alkyl esters represented by general formula [V].

DETAILED DESCRIPTION OF THE PREFERRED EMBODIMENTS

Herein, in the reaction of the alkylamine salts represented by general formula [III] with cyanoguanidine, both compounds may be used in equimolar amounts. The solvents used may be cyclic hydrocarbons such as benzene, decaline, or alkylnaphthalenes; chlorinated hydrocarbons such as carbon tetrachloride, ethylene dichloride, chlorobenzene, dichlorobenzene, or trichlorobenzene.

A reaction temperature is not particularly limited but the reaction sufficiently proceeds at a high temperature ranging from 80 to 200 °C.

According to this reaction, the alkylbiguanide derivative salts shown by general formula [IV] are obtained. By reacting salts [IV] with alkyl esters represented by general formula [V], the desired triazine derivatives represented by general formula [I] are prepared. This reaction efficiently proceeds in solvents such as alcohols, e.g., methanol, ethanol, isopropanol, various ketones, aliphatic hydrocarbons, various ethers, various cyclic hydrocarbons, and chlorinated hydrocarbons, in the presence of a catalyst such as a base, at a temperature of about 10 to about 100 °C.

Optical isomers are also present in these compounds and the products are obtained generally in the racemic form. However, it is also possible to the respective enantiomers in a conventional manner such as asymmetric synthesis. In the present invention, both racemic compounds and optical isomers alone may be used. The products may be in the form of salts with inorganic acid or organic acid.

On the other hand, specific examples of the urea type herbicide represented by general formula [II] described above include N'-phenyl-N,N-dimethylurea, N'-(3-tri fluoromethylphenyl)-N,N-dimethylurea, N'-(3,4-dichlorophenyl)-N,N-dimethylurea, N'-(3-chloro-4-methylphenyl)-N,N-dimethylurea, N'-(4-isopropylphenyl)-N,N-dimethylurea, N'-(4-chlorophenyl)-N-methoxy-N-methylurea, N'-(3,4-dichlorophenyl)-N-methoxy-N-methylurea, N'-2-benzothiazoyl-N',N-dimethylurea, etc. Among them, preferred are N'-(3,4-dichlorophenyl)-N,N-dimethylurea, N'-(3-chloro-4-methylphenyl)-N,N-dimethylurea, N'-(4-isopropylphenyl)-N,N-dimethylurea, N'-(3,4-dichlorophenyl)-N-methoxy-N-methylurea and N'-2-benzothiazoyl-N',N-dimethylurea.

The urea type herbicide represented by general formula [II] can be prepared by known process. These urea type herbicides do not have a sufficient herbicidal effect on certain weeds such as Galium aparine L., Veronica hederifolia, Viola arvensis, etc.

The herbicidal composition of the present invention comprises as active ingredients the triazine derivatives represented by general formula [I] described above and the urea type herbicides represented by general formula [II] described above. A proportion of these components to be formulated is not particularly limited but in a wide range of proportion, an excellent synergistic effect can be obtained. In general, it is preferred to formulate the triazine derivative and the urea type herbicide in a range of from 10 : 1 to 1 : 100 (weight ratio).

The herbicidal composition of the present invention may be used in the form of wettable powders, emulsifiable concentrates, dusts, granules, flowable concentrates, and solutions, by blending the triazine derivatives represented by general formula [I] described above and the urea type herbicides represented by general formula [II] described above with liquid carriers such as solvents, etc. or with solid carriers such as mineral powders, etc. In preparing into these forms, there may be added surfactants such as emulsifiers, dispersing agents, developers, suspending agents, permeating agents, stabilizers, etc. and, if necessary, other auxiliary agents.

Where the herbicidal composition of the present invention is used in the form of wettable powders, 10 to 55 wt% of the aforesaid triazine derivatives and the urea type herbicide as active ingredients, 40 to 88 wt% of the solid carrier and 2 to 5 wt% of the surfactant may generally be formulated to prepare a composition and the composition may be used. Where the herbicidal composition is used in the form of emulsifiable concentrate or flowable concentrate, 5 to 50 wt% of the aforesaid triazine derivatives and the urea type herbicide as active ingredients, 35 to 90 wt% of the solvent and 5 to 15 wt% of the surfactant and other auxiliary agent may generally be formulated to prepare a composition and the resulting composition may be used.

Where herbicidal composition is used in the form of dust, 1 to 15 wt% of the aforesaid triazine derivatives and the urea type herbicide as active ingredients and 85 to 99 wt% of the solid carrier may generally be formulated to prepare a composition. Where the herbicidal composition of the present invention is used in the form of granules, 0.1 to 15 wt% of the aforesaid triazine derivatives and the urea type herbicide as active ingredients, 80 to 97.9 wt% of the solid carrier and 2 to 5 wt% of the surfactant may generally be formulated to prepare a composition. Herein, as the solid carrier, finely divided mineral powders are used. As the finely divided mineral powders, there are diatomaceous earth, and oxides such as slaked lime; phosphates such as apatite; sulfates such as gypsum; silicates such as talc, pyrophyllite, clay, kaolin, bentonite, acid clay, white carbon, quartz powders, silica powders, etc.

As the liquid carrier, there may be organic solvents, for example, paraffin type or naphthene type hydrocarbons such as kerosene, mineral oil, or spindle oil; aromatic hydrocarbons such as benzene, toluene or xylene,; chlorinated hydrocarbons such as o-chlorotoluene, trichloromethane, or trichloroethylene; alcohols such as cyclohexanol, amyl alcohol, or ethylene glycol; alcohol ethers such as ethylene glycol monomethyl ether, or ethylene glycol monoethyl ether; ketones such as isophorone, cyclohexanone, cyclohexenyl-cyclohexanone, etc.; ethers such as butyl cellosolve, dimethyl ether, or methyl ethyl ether; esters such as isopropyl acetate, benzyl acetate, or methyl phthalate; amides such as dimethylformamide; nitriles such as acetonitrile, propionitrile; sulfoxides such as dimethylsulfoxide; or a mixture thereof; or water and the like.

As the surfactant, there may be used any of anionic type (alkylbenzene sulfonate, alkyl sulfonates, or laurinamide sulfonate,), nonionic type (polyoxyethylene octyl ether, polyethylene glycol laurate, or sorbitan alkyl esters), cationic type (dimethyllaurylbenzyl ammonium chloride, laurylamine, or stearyltrimethyl ammonium chloride) and amphoteric type (amino acids, or betaine).

For purposes of improving properties of the preparation and enhancing the herbicidal effect, the herbicidal composition of the present invention may also contain high molecular compounds such as sodium alginate, carboxymethyl cellulose, carboxyvinyl polymer, gum arabic, or hydroxypropylmethyl cellulose, and auxiliary agents in combination.

The herbicidal composition of the present invention exhibits an excellent effect on weeds in field crops such as corn, sorghum, wheat, barley, and oats, as a high degree of selective herbicide without causing any phytotoxicities to crops by pre-or post-emergence treatment to the soil or the foliage of weeds. The herbicidal composition shows a high herbicidal effect not only against annual weeds but also against perennial weeds and is extremely useful as a high degree of selective, herbicide without causing any phytotoxicities for paddy rice plants or lawns.

The herbicidal composition of the present invention also exhibits an excellent effect of controlling weeds in orchards or non-cultivated fields (factory areas, railways, roadsides, waterways, fallow grounds), or by treatment to the soil or to the foliage of weeds.

The herbicidal composition of the present invention is applied in an amount of about 0.1 to 10,000 g, preferably 1 to 1,000 g, per 10 ares. Where the composition is sprayed over the foliage of plant, the composition is diluted to about 1 to about 100,000 ppm, preferably 10 to 10,000 ppm and the diluted preparation is applied to the foliage.

The herbicidal composition of the present invention may also be used in combination with other herbicids. Examples of the conventional herbicids which can be used herein include diphenyl ether compounds, triazine compounds, carbamate compounds, thiocarbamate compounds, acid anilide compounds, pyrazole compounds, phosphoric acid compounds, sulfonylurea compounds, imidazolinone compounds, dinitroaniline compounds, bromoxinyl, ioxinyl, and oxadiazone.

Furthermore, the herbicidal composition of the present invention may also be used as admixture with insecticides, sterilizers, plant growth regulators, fertilizers, etc., if necessary.

The present invention is described with reference to examples.

A method for making the formulations is specifically described by referring to the formulation examples. In the following formulation examples, "part"refers to % by weight. As the triazine derivative (Compound A) and the urea type herbicide (Compound B) compounds shown in Tables 1 and 2 were used, respectively.

Table 1

| Compound No. | Structural Formula | Name of Compound |
|---|---|---|
| A-1 | 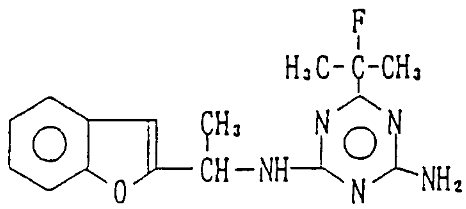 | 2-amino-4-[1-(benzofuran-2'-yl)ethylamino]-6-(α-fluoro, α-methylethyl)-s-triazine |
| A-2 | 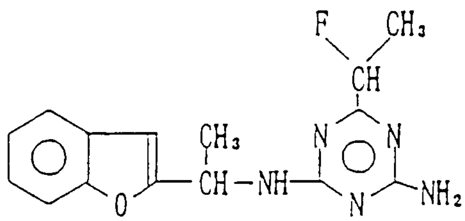 | 2-amino-4-[1-(benzofuran-2'-yl)ethylamino]-6(α-fluoroethyl)-s-triazine |
| A-3 | 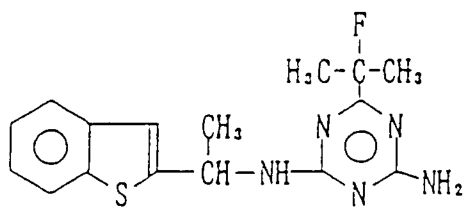 | 2-amino-4-[1-(benzothiophen-2'-yl)ethylamino]-6-(α-fluoro,α-methylethyl)-s-triazine |
| A-4 | 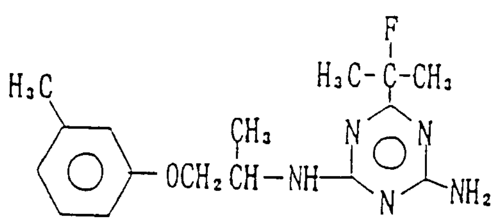 | 2-amino-4-[α-fluoro,α-methylethyl-6-(2 — 3' methylphenoxy)-1-methylethylamino]-s-triazine |
| A-5 | 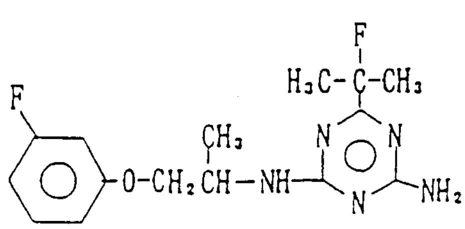 | 2-amino-4-(α-fluoro,α-methylethyl)-6-[2-(3'-fluorophenoxy)-1-methylethylamino]-s-triazine |

Table 1 (Continued)

| Compound No. | Structural Formula | Name of Compound |
|---|---|---|
| A-6 | 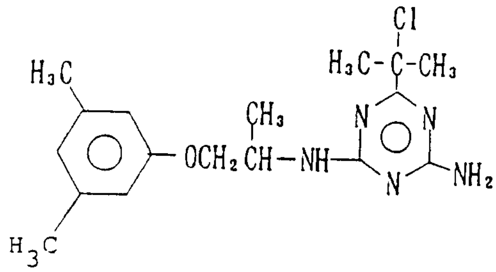 | 2-amino-4-(α-chloro,α-methylethyl)-6-[2-(3',5'-dimethylphenoxy)-1-methylethylamino]-s-triazine |
| A-7 | 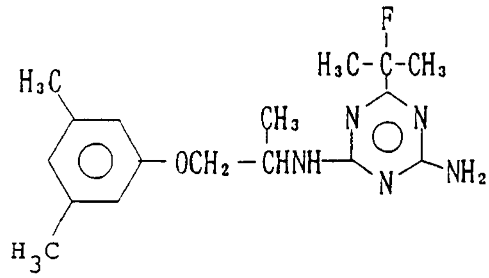 | 2-amino-4-(α-fluoro,α-methylethyl)-6-[2-(3',5'-dimethylphenoxy)-1-methylethylamino]-s-triazine |

Table 2

| Compound No. | Structural Formula | Name of Compound |
|---|---|---|
| B-1 | 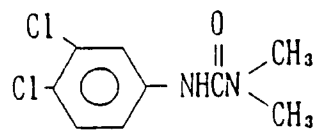 | N'-(3,4-dichlorophenyl)-N,N-dimethylurea |
| B-2 | 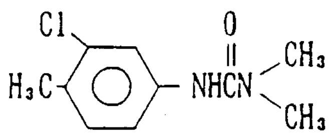 | N'-(3-chloro-4-methylphenyl)-N,N-dimethylurea |
| B-3 | 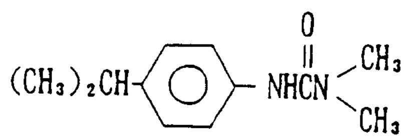 | N'-(4-isopropylphenyl)-N,N-dimethylurea |
| B-4 | 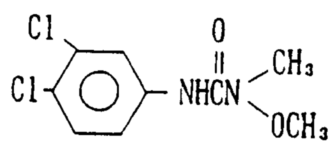 | N'-(3,4-dichlorophenyl)-N-methoxy-N-methylurea |
| B-5 | 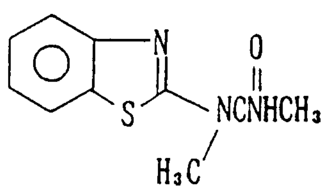 | N'-(2-benzothiazoyl)-N',N-dimethylurea |

Formulation Example 1 Wettable powders

| | |
|---|---|
| Compound A-1 | 5 parts |
| Compound B-1 | 15 parts |
| Diatomaceous earth | 62 parts |
| White carbon | 15 parts |
| Sodium alkylbenzenesulfonate | 2 parts |
| Sodium lignin sulfonate | 1 part |

The foregoing components are blended with each other, uniformly kneaded and ground into powders to give 100 parts of wettable powders.

Formulation Example 2 Emulsifiable concentrate

| | |
|---|---|
| Compound A-2 | 10 parts |
| Compound B-2 | 30 parts |
| Xylene | 20 parts |
| Dimethylformamide | 20 parts |
| Solpol 2806B (manufactured by Toho Chemical Industry, surfactant) | 20 parts |

The foregoing components are uniformly dissolved and blended to give 100 parts of emulsifiable concentrate.

Formulation Example 3 Dust

| | |
|---|---|
| Compound A-3 | 0.6 part |
| Compound B-3 | 1.4 parts |
| Diatomaceous earth | 20 parts |
| Talc | 78 parts |

The foregoing components are blended with each other, uniformly kneaded and ground to give 100 parts of dusts.

Formulation Example 4 Granule

| | |
|---|---|
| Compound A-4 | 1 part |
| Compound B-4 | 3 parts |
| Bentonite | 30 parts |
| Talc | 63 parts |
| Sodium lignin sulfonate | 3 parts |

The foregoing components are thoroughly blended with each other, uniformly mixed and ground into powders. Water is added to the powders. After kneading them well, the blend is grained and dried to give 100 parts of granules.

Formulation Example 5 Flowable concentrate

| | |
|---|---|
| Compound A-5 | 10 parts |
| Compound B-5 | 15 parts |
| Methyl cellulose | 0.3 part |
| Colloidal silica | 1.5 parts |
| Sodium lignin sulfonate | 1 part |
| Polyoxyethylene nonyl phenyl ether | 2 parts |
| Water | 70.2 parts |

The foregoing components are thoroughly mixed and dispersed. The resulting slurry mixture is subjected to wet grinding to give 100 parts of stable flowable concentrate.

Formulation Example 6 Wettable powders

By uniformly blending 97 parts of clay (trademark: JIKURAITO, manufactured by JIKURAITO KOGYO) as a carrier, 1.5 parts of alkylaryl sulfonate (trademark: NEOPELEX, manufactured by Kao Atlas Co., Ltd.) as a surfactant, 1.5 parts of nonionic and anionic surfactant (trademark: Solpol 800A, manufactured by Toho Chemical Industry Co., Ltd.) and grinding into powders, a carrier for wettable powders was obtained.

By uniformly blending 90 parts of this carrier for wettable powders and 10 parts of the triazine derivative shown in Table 1 (Compounds A-1 through A-7) or 10 parts of the urea type herbicide shown in Table 2 (Compounds B-1 to B-4) and grinding into powders, wettable powders were obtained.

Furthermore, the carrier for wettable powders containing the triazine derivative obtained above was blended with the carrier for wettable powders containing the urea type herbicide in definite amounts (ratios as active ingredients), uniformly kneaded and ground into powders to give wettable powders.

Example 1 Test on pre-emergence treatment

Wagner's pots of 1/2000 ares were filled with soil from upland fields and planted with weed seeds of Alopecurus myosuroides, Galium aparine L., Veronica hederifolia and Viola arvensis and crop seeds of wheat and barley. The seeds were then covered with soil. Before germination of the weed and crop seeds, an aqueous suspension of a definite amount of the herbicide obtained in Formulation Example 6 was uniformly sprayed onto the soil surface at a spray volume corresponding to 100 liters/10 ares. Then, cultivation was performed in a greenhouse. Thirty days after the treatment, crop injury and the herbicidal effect on the weeds were evaluated according to the criterion described below. The results are shown in Table 3.

(Criterion for assessment)

| Degree of herbicidal effect | Percent of weed control (herbicidal rate) |
|---|---|
| 0 | less than 5% (little effective) |
| 1 | 5-20% |
| 2 | 20-40% |
| 3 | 40-70% |
| 4 | 70-90% |
| 5 | more than 90% (almost all killed) |

The herbicidal rate described above was determined according to the following equation by measuring the raw weight of weed on the ground in the treated pot and the raw weight of weed on the ground in the untreated pot.

$$\text{Herbicidal rate (\%)} = \left(1 - \frac{\text{Weight of weed on the ground in the treated pot}}{\text{Weight of weed on the ground in the untreated pot}}\right) \times 100$$

Degree of crop injury

- 0 no injury to crops
- 1 little injury to crops
- 2 some injury to crops
- 3 injury to crops
- 4 serious injury to crops
- 5 almost all crops are withered to death

Table 3

| Active ingredient | | Dosage (g/10a) | Herbicidal Effect | | | | Crop Injury | |
|---|---|---|---|---|---|---|---|---|
| | | | Alopecurus myosuroides | Galium aparine L. | Veronica hederifolia | Viola arvensis | Wheat | Barley |
| Triazine Derivative | A-1 | 20<br>10 | 2<br>1 | 2<br>1 | 3<br>2 | 3<br>1 | 0<br>0 | 0<br>0 |
| | A-2 | 20<br>10 | 3<br>1 | 3<br>2 | 4<br>2 | 3<br>2 | 0<br>0 | 0<br>0 |
| | A-3 | 20<br>10 | 2<br>1 | 2<br>1 | 3<br>2 | 2<br>1 | 0<br>0 | 0<br>0 |
| | A-4 | 20<br>10 | 1<br>0 | 3<br>2 | 3<br>2 | 3<br>1 | 0<br>0 | 0<br>0 |
| | A-5 | 20<br>10 | 3<br>2 | 4<br>2 | 4<br>3 | 4<br>2 | 0<br>0 | 0<br>0 |
| | A-6 | 20<br>10 | 1<br>0 | 2<br>1 | 3<br>2 | 3<br>2 | 0<br>0 | 0<br>0 |
| | A-7 | 20<br>10 | 3<br>2 | 4<br>3 | 4<br>3 | 4<br>2 | 0<br>0 | 0<br>0 |
| Urea Type Herbicide | B-2 | 200<br>150 | 4<br>3 | 2<br>1 | 2<br>0 | 1<br>0 | 0<br>0 | 0<br>0 |
| | B-3 | 150<br>100 | 4<br>2 | 1<br>0 | 2<br>1 | 1<br>0 | 0<br>0 | 0<br>0 |
| | B-5 | 200<br>150 | 4<br>2 | 1<br>0 | 1<br>0 | 1<br>0 | 0<br>0 | 0<br>0 |

Table 3 (Continued)

| Triazine derivative | | Urea Type herbicide | | Herbicidal Effect | | | | Crop Injury | |
|---|---|---|---|---|---|---|---|---|---|
| Kind | Dosage (g/10a) | Kind | Dosage (g/10a) | Alopecurus myosuroides | Galium aparine L. | Veronica hederifolia | Viola arvensis | Wheat | Barley |
| A-1 | 20 | B-2 | 200 | 5 | 5 | 5 | 5 | 0 | 0 |
| | 20 | | 150 | 5 | 5 | 5 | 5 | 0 | 0 |
| | 10 | | 200 | 5 | 5 | 5 | 5 | 0 | 0 |
| | 10 | | 150 | 5 | 5 | 5 | 5 | 0 | 0 |
| A-1 | 20 | B-3 | 150 | 5 | 5 | 5 | 5 | 0 | 0 |
| | 20 | | 100 | 5 | 5 | 5 | 5 | 0 | 0 |
| | 10 | | 150 | 5 | 5 | 5 | 5 | 0 | 0 |
| | 10 | | 100 | 5 | 5 | 5 | 5 | 0 | 0 |
| A-2 | 20 | B-2 | 200 | 5 | 5 | 5 | 5 | 0 | 0 |
| | 20 | | 150 | 5 | 5 | 5 | 5 | 0 | 0 |
| | 10 | | 200 | 5 | 5 | 5 | 5 | 0 | 0 |
| | 10 | | 150 | 5 | 5 | 5 | 5 | 0 | 0 |
| A-2 | 20 | B-3 | 150 | 5 | 5 | 5 | 5 | 0 | 0 |
| | 20 | | 100 | 5 | 5 | 5 | 5 | 0 | 0 |
| | 10 | | 150 | 5 | 5 | 5 | 5 | 0 | 0 |
| | 10 | | 100 | 5 | 5 | 5 | 5 | 0 | 0 |
| A-2 | 20 | B-5 | 200 | 5 | 5 | 5 | 5 | 0 | 0 |
| | 20 | | 150 | 5 | 5 | 5 | 5 | 0 | 0 |
| | 10 | | 200 | 5 | 5 | 5 | 5 | 0 | 0 |
| | 10 | | 150 | 5 | 5 | 5 | 5 | 0 | 0 |
| A-3 | 20 | B-2 | 200 | 5 | 5 | 5 | 5 | 0 | 0 |
| | 20 | | 150 | 5 | 5 | 5 | 5 | 0 | 0 |
| | 10 | | 200 | 5 | 5 | 5 | 5 | 0 | 0 |
| | 10 | | 150 | 5 | 5 | 5 | 5 | 0 | 0 |
| A-3 | 20 | B-3 | 150 | 5 | 5 | 5 | 5 | 0 | 0 |
| | 20 | | 100 | 5 | 5 | 5 | 5 | 0 | 0 |
| | 10 | | 150 | 5 | 5 | 5 | 5 | 0 | 0 |
| | 10 | | 100 | 5 | 5 | 5 | 5 | 0 | 0 |
| A-4 | 20 | B-2 | 200 | 5 | 5 | 5 | 5 | 0 | 0 |
| | 20 | | 150 | 5 | 5 | 5 | 5 | 0 | 0 |
| | 10 | | 200 | 5 | 5 | 5 | 5 | 0 | 0 |
| | 10 | | 150 | 5 | 5 | 5 | 5 | 0 | 0 |
| A-4 | 20 | B-3 | 150 | 5 | 5 | 5 | 5 | 0 | 0 |
| | 20 | | 100 | 5 | 5 | 5 | 5 | 0 | 0 |
| | 10 | | 150 | 5 | 5 | 5 | 5 | 0 | 0 |
| | 10 | | 100 | 5 | 5 | 5 | 5 | 0 | 0 |

Table 3 (Continued)

| Triazine derivative | | Urea Type herbicide | | Herbicidal Effect | | | | Crop Injury | |
|---|---|---|---|---|---|---|---|---|---|
| Kind | Dosage (g/10a) | Kind | Dosage (g/10a) | Alopecurus myosuroides | Galium aparine L. | Veronica hederifolia | Viola arvensis | Wheat | Barley |
| A-5 | 20 | B-2 | 200 | 5 | 5 | 5 | 5 | 0 | 0 |
| | 20 | | 150 | 5 | 5 | 5 | 5 | 0 | 0 |
| | 10 | | 200 | 5 | 5 | 5 | 5 | 0 | 0 |
| | 10 | | 150 | 5 | 5 | 5 | 5 | 0 | 0 |
| A-5 | 20 | B-3 | 200 | 5 | 5 | 5 | 5 | 0 | 0 |
| | 20 | | 150 | 5 | 5 | 5 | 5 | 0 | 0 |
| | 10 | | 200 | 5 | 5 | 5 | 5 | 0 | 0 |
| | 10 | | 150 | 5 | 5 | 5 | 5 | 0 | 0 |
| A-5 | 20 | B-5 | 150 | 5 | 5 | 5 | 5 | 0 | 0 |
| | 20 | | 100 | 5 | 5 | 5 | 5 | 0 | 0 |
| | 10 | | 150 | 5 | 5 | 5 | 5 | 0 | 0 |
| | 10 | | 100 | 5 | 5 | 5 | 5 | 0 | 0 |
| A-6 | 20 | B-2 | 200 | 5 | 5 | 5 | 5 | 0 | 0 |
| | 20 | | 150 | 5 | 5 | 5 | 5 | 0 | 0 |
| | 10 | | 200 | 5 | 5 | 5 | 5 | 0 | 0 |
| | 10 | | 150 | 5 | 5 | 5 | 5 | 0 | 0 |
| A-6 | 20 | B-3 | 150 | 5 | 5 | 5 | 5 | 0 | [illegible] |
| | 20 | | 100 | 5 | 5 | 5 | 5 | 0 | 0 |
| | 10 | | 150 | 5 | 5 | 5 | 5 | 0 | 0 |
| | 10 | | 100 | 5 | 5 | 5 | 5 | 0 | 0 |
| A-7 | 20 | B-2 | 200 | 5 | 5 | 5 | 5 | 0 | 0 |
| | 20 | | 150 | 5 | 5 | 5 | 5 | 0 | 0 |
| | 10 | | 200 | 5 | 5 | 5 | 5 | 0 | 0 |
| | 10 | | 150 | 5 | 5 | 5 | 5 | 0 | 0 |
| A-7 | 20 | B-3 | 200 | 5 | 5 | 5 | 5 | 0 | 0 |
| | 20 | | 150 | 5 | 5 | 5 | 5 | 0 | 0 |
| | 10 | | 200 | 5 | 5 | 5 | 5 | 0 | 0 |
| | 10 | | 150 | 5 | 5 | 5 | 5 | 0 | 0 |
| A-7 | 20 | B-5 | 150 | 5 | 5 | 5 | 5 | 0 | 0 |
| | 20 | | 100 | 5 | 5 | 5 | 5 | 0 | 0 |
| | 10 | | 150 | 5 | 5 | 5 | 5 | 0 | 0 |
| | 10 | | 100 | 5 | 5 | 5 | 5 | 0 | 0 |

Example 2 Test on post-emergence treatment

Wagner's pots of 1/2000 ares were filled with soil from upland fields and planted with weed seeds of Abutilon theophrasti, Galium aparine L., Veronica hederifolia and Viola arvensis and crop seeds of wheat and barley. The seeds were then covered with soil and cultivated in a greenhouse. An aqueous suspension of a definite amount of the herbicide obtained in Formulation Example 6 was uniformly sprayed onto the foliage of 1.5 to 2.5 leaf stage of these weeds and 3 leaf stage of the crops at a spray volume corresponding to 100 liters/10 ares. Then, cultivation was performed in the greenhouse. After 20 days, crop injury and the herbicidal effect on the weeds were evaluated according to the same criterion described in Example 1. The results are shown in Table 4.

Table 4

| Active ingredient | | Dosage (g/10a) | Herbicidal Effect | | | | Crop Injury | |
|---|---|---|---|---|---|---|---|---|
| | | | Alopecurus myosuroides | Galium aparine L. | Veronica hederifolia | Viola arvensis | Wheat | Barley |
| Triazine Derivative | A-1 | 10<br>5 | 2<br>1 | 2<br>1 | 3<br>2 | 3<br>2 | 0<br>0 | 0<br>0 |
| | A-2 | 10<br>5 | 3<br>2 | 3<br>2 | 4<br>2 | 4<br>3 | 0<br>0 | 0<br>0 |
| | A-3 | 10<br>5 | 2<br>1 | 3<br>1 | 3<br>2 | 3<br>2 | 0<br>0 | 0<br>0 |
| | A-4 | 10<br>5 | 2<br>1 | 3<br>1 | 3<br>2 | 4<br>2 | 0<br>0 | 0<br>0 |
| | A-5 | 10<br>5 | 3<br>1 | 3<br>2 | 4<br>3 | 4<br>3 | 0<br>0 | 0<br>0 |
| | A-6 | 10<br>5 | 2<br>1 | 3<br>1 | 3<br>2 | 4<br>2 | 0<br>0 | 0<br>0 |
| | A-7 | 10<br>5 | 3<br>1 | 4<br>2 | 4<br>2 | 4<br>3 | 0<br>0 | 0<br>0 |
| Urea Type Herbicide | B-2 | 200<br>150 | 4<br>3 | 2<br>1 | 1<br>0 | 2<br>1 | 0<br>0 | 0<br>0 |
| | B-3 | 150<br>100 | 4<br>3 | 1<br>0 | 2<br>1 | 1<br>0 | 0<br>0 | 0<br>0 |
| | B-5 | 200<br>150 | 4<br>2 | 1<br>0 | 1<br>0 | 2<br>1 | 0<br>0 | 0<br>0 |

Table 4 (Continued)

| Triazine derivative | | Urea Type herbicide | | Herbicidal Effect | | | | Crop Injury | |
|---|---|---|---|---|---|---|---|---|---|
| Kind | Dosage (g/10a) | Kind | Dosage (g/10a) | Alopecurus myosuroides | Galium aparine L. | Veronica hederifolia | Viola arvensis | Wheat | Barley |
| A-1 | 10 | B-2 | 200 | 5 | 5 | 5 | 5 | 0 | 0 |
| | 10 | | 150 | 5 | 5 | 5 | 5 | 0 | 0 |
| | 5 | | 200 | 5 | 5 | 5 | 5 | 0 | 0 |
| | 5 | | 150 | 5 | 4 | 5 | 5 | 0 | 0 |
| A-1 | 10 | B-3 | 150 | 5 | 5 | 5 | 5 | 0 | 0 |
| | 10 | | 100 | 5 | 5 | 5 | 5 | 0 | 0 |
| | 5 | | 150 | 5 | 5 | 5 | 5 | 0 | 0 |
| | 5 | | 100 | 5 | 4 | 5 | 5 | 0 | 0 |
| A-2 | 10 | B-2 | 200 | 5 | 5 | 5 | 5 | 0 | 0 |
| | 10 | | 150 | 5 | 5 | 5 | 5 | 0 | 0 |
| | 5 | | 200 | 5 | 5 | 5 | 5 | 0 | 0 |
| | 5 | | 150 | 5 | 5 | 5 | 5 | 0 | 0 |
| A-2 | 10 | B-3 | 150 | 5 | 5 | 5 | 5 | 0 | 0 |
| | 10 | | 100 | 5 | 5 | 5 | 5 | 0 | 0 |
| | 5 | | 150 | 5 | 5 | 5 | 5 | 0 | 0 |
| | 5 | | 100 | 5 | 5 | 5 | 5 | 0 | 0 |
| A-2 | 10 | B-5 | 200 | 5 | 5 | 5 | 5 | 0 | 0 |
| | 10 | | 150 | 5 | 5 | 5 | 5 | 0 | 0 |
| | 5 | | 200 | 5 | 5 | 5 | 5 | 0 | 0 |
| | 5 | | 150 | 5 | 5 | 5 | 5 | 0 | 0 |
| A-3 | 10 | B-2 | 200 | 5 | 5 | 5 | 5 | 0 | 0 |
| | 10 | | 150 | 5 | 5 | 5 | 5 | 0 | 0 |
| | 5 | | 200 | 5 | 5 | 5 | 5 | 0 | 0 |
| | 5 | | 150 | 5 | 4 | 5 | 5 | 0 | 0 |
| A-3 | 10 | B-3 | 150 | 5 | 5 | 5 | 5 | 0 | 0 |
| | 10 | | 100 | 5 | 5 | 5 | 5 | 0 | 0 |
| | 5 | | 150 | 5 | 5 | 5 | 5 | 0 | 0 |
| | 5 | | 100 | 5 | 4 | 5 | 5 | 0 | 0 |
| A-4 | 10 | B-2 | 200 | 5 | 5 | 5 | 5 | 0 | 0 |
| | 10 | | 150 | 5 | 5 | 5 | 5 | 0 | 0 |
| | 5 | | 200 | 5 | 5 | 5 | 5 | 0 | 0 |
| | 5 | | 150 | 5 | 5 | 5 | 5 | 0 | 0 |
| A-4 | 10 | B-3 | 150 | 5 | 5 | 5 | 5 | 0 | 0 |
| | 10 | | 100 | 5 | 5 | 5 | 5 | 0 | 0 |
| | 5 | | 150 | 5 | 5 | 5 | 5 | 0 | 0 |
| | 5 | | 100 | 5 | 5 | 5 | 5 | 0 | 0 |

Table 4 (Continued)

| Triazine derivative | | Urea Type herbicide | | Herbicidal Effect | | | | Crop Injury | |
|---|---|---|---|---|---|---|---|---|---|
| Kind | Dosage (g/10a) | Kind | Dosage (g/10a) | Alopecurus myosuroides | Galium aparine L. | Veronica hederifolia | Viola arvensis | Wheat | Barley |
| A-5 | 10 | B-2 | 200 | 5 | 5 | 5 | 5 | 0 | 0 |
| | 10 | | 150 | 5 | 5 | 5 | 5 | 0 | 0 |
| | 5 | | 200 | 5 | 5 | 5 | 5 | 0 | 0 |
| | 5 | | 150 | 5 | 5 | 5 | 5 | 0 | 0 |
| A-5 | 10 | B-3 | 200 | 5 | 5 | 5 | 5 | 0 | 0 |
| | 10 | | 150 | 5 | 5 | 5 | 5 | 0 | 0 |
| | 5 | | 200 | 5 | 5 | 5 | 5 | 0 | 0 |
| | 5 | | 150 | 5 | 5 | 5 | 5 | 0 | 0 |
| A-5 | 10 | B-5 | 150 | 5 | 5 | 5 | 5 | 0 | 0 |
| | 10 | | 100 | 5 | 5 | 5 | 5 | 0 | 0 |
| | 5 | | 150 | 5 | 5 | 5 | 5 | 0 | 0 |
| | 5 | | 100 | 5 | 5 | 5 | 5 | 0 | 0 |
| A-6 | 10 | B-2 | 200 | 5 | 5 | 5 | 5 | 0 | 0 |
| | 10 | | 150 | 5 | 5 | 5 | 5 | 0 | 0 |
| | 5 | | 200 | 5 | 5 | 5 | 5 | 0 | 0 |
| | 5 | | 150 | 5 | 4 | 5 | 5 | 0 | 0 |
| A-6 | 10 | B-3 | 150 | 5 | 5 | 5 | 5 | 0 | 0 |
| | 10 | | 100 | 5 | 5 | 5 | 5 | 0 | 0 |
| | 5 | | 150 | 5 | 5 | 5 | 5 | 0 | 0 |
| | 5 | | 100 | 5 | 4 | 5 | 5 | 0 | 0 |
| A-7 | 10 | B-2 | 200 | 5 | 5 | 5 | 5 | 0 | 0 |
| | 10 | | 150 | 5 | 5 | 5 | 5 | 0 | 0 |
| | 5 | | 200 | 5 | 5 | 5 | 5 | 0 | 0 |
| | 5 | | 150 | 5 | 5 | 5 | 5 | 0 | 0 |
| A-7 | 10 | B-3 | 150 | 5 | 5 | 5 | 5 | 0 | 0 |
| | 10 | | 100 | 5 | 5 | 5 | 5 | 0 | 0 |
| | 5 | | 150 | 5 | 5 | 5 | 5 | 0 | 0 |
| | 5 | | 100 | 5 | 5 | 5 | 5 | 0 | 0 |
| A-7 | 10 | B-5 | 200 | 5 | 5 | 5 | 5 | 0 | 0 |
| | 10 | | 150 | 5 | 5 | 5 | 5 | 0 | 0 |
| | 5 | | 200 | 5 | 5 | 5 | 5 | 0 | 0 |
| | 5 | | 150 | 5 | 5 | 5 | 5 | 0 | 0 |

Example 3 Test on post-emergence treatment

Wagner's pots of 1/2000 ares were filled with soil from upland fields and planted with weed seeds of Digitaria sanguinalis, Abutilon theophrasti, Ipomoea purpurea and Galium aparine L. and crop seeds of corn, sorghum, wheat, barley and oat. The seeds were then covered with soil and cultivated in a greenhouse. An aqueous suspension of a definite amount of the herbicide obtained in Formulation Example 6 was uniformly sprayed onto the foliage of 2 to 3 leaf stage of these weeds and 3 leaf stage of the crops at a spray volume corresponding to 100 liters/10 ares. Then, cultivation was performed in the greenhouse. After 20 days, crop injury and the herbicidal effect on the weeds were evaluated according to the same criterion described in Example 1. The results are shown in Table 5.

Table 5

| Active ingredient | | Dosage (g/10a) | Herbicidal Effect | | | | Crop Injury | | | | |
|---|---|---|---|---|---|---|---|---|---|---|---|
| | | | Digitaria sanguinalis | Abutilon theophrasti | Galium aparine L. | Ipomoea purpurea | Corn | Sorghum | Wheat | Barley | Oat |
| Triazine Derivative | A-1 | 10 | 3 | 3 | 2 | 4 | 0 | 0 | 0 | 0 | 0 |
| | | 5 | 1 | 1 | 1 | 2 | 0 | 0 | 0 | 0 | 0 |
| | A-2 | 10 | 3 | 4 | 3 | 4 | 0 | 0 | 0 | 0 | 0 |
| | | 5 | 1 | 2 | 1 | 3 | 0 | 0 | 0 | 0 | 0 |
| | A-3 | 10 | 2 | 3 | 2 | 4 | 0 | 0 | 0 | 0 | 0 |
| | | 5 | 1 | 2 | 1 | 2 | 0 | 0 | 0 | 0 | 0 |
| | A-4 | 10 | 2 | 3 | 3 | 4 | 0 | 0 | 0 | 0 | 0 |
| | | 5 | 1 | 2 | 1 | 3 | 0 | 0 | 0 | 0 | 0 |
| | A-5 | 10 | 3 | 4 | 3 | 5 | 0 | 0 | 0 | 0 | 0 |
| | | 5 | 2 | 3 | 2 | 4 | 0 | 0 | 0 | 0 | 0 |
| | A-6 | 10 | 2 | 3 | 3 | 5 | 0 | 0 | 0 | 0 | 0 |
| | | 5 | 1 | 2 | 1 | 3 | 0 | 0 | 0 | 0 | 0 |
| | A-7 | 10 | 3 | 4 | 3 | 5 | 0 | 0 | 0 | 0 | 0 |
| | | 5 | 2 | 3 | 2 | 4 | 0 | 0 | 0 | 0 | 0 |
| Urea Type Herbicide | B-1 | 100 | 4 | 2 | 3 | 3 | 0 | 0 | 0 | 0 | 0 |
| | | 50 | 3 | 1 | 1 | 2 | 0 | 0 | 0 | 0 | 0 |
| | B-4 | 100 | 4 | 2 | 1 | 3 | 0 | 0 | 0 | 0 | 0 |
| | | 50 | 3 | 1 | 0 | 1 | 0 | 0 | 0 | 0 | 0 |

Table 5 (Continued)

| Triazine derivative | | Urea Type herbicide | | Herbicidal Effect | | | | Crop Injury | | | | |
|---|---|---|---|---|---|---|---|---|---|---|---|---|
| Kind | Dosage (g/10a) | Kind | Dosage (g/10a) | Digitaria sanguinalis | Abutilon theophrasti | Galium aparine L. | Ipomoea purpurea | Corn | Sorghum | Wheat | Barley | Oat |
| A-1 | 10 | B-1 | 100 | 5 | 5 | 5 | 5 | 0 | 0 | 0 | 0 | 0 |
| | 10 | | 50 | 5 | 5 | 5 | 5 | 0 | 0 | 0 | 0 | 0 |
| | 5 | | 100 | 5 | 5 | 5 | 5 | 0 | 0 | 0 | 0 | 0 |
| | 5 | | 50 | 5 | 5 | 5 | 5 | 0 | 0 | 0 | 0 | 0 |
| A-2 | 10 | B-1 | 100 | 5 | 5 | 5 | 5 | 0 | 0 | 0 | 0 | 0 |
| | 10 | | 50 | 5 | 5 | 5 | 5 | 0 | 0 | 0 | 0 | 0 |
| | 5 | | 100 | 5 | 5 | 5 | 5 | 0 | 0 | 0 | 0 | 0 |
| | 5 | | 50 | 5 | 5 | 5 | 5 | 0 | 0 | 0 | 0 | 0 |
| A-2 | 10 | B-4 | 100 | 5 | 5 | 5 | 5 | 0 | 0 | 0 | 0 | 0 |
| | 10 | | 50 | 5 | 5 | 5 | 5 | 0 | 0 | 0 | 0 | 0 |
| | 5 | | 100 | 5 | 5 | 5 | 5 | 0 | 0 | 0 | 0 | 0 |
| | 5 | | 50 | 5 | 5 | 5 | 5 | 0 | 0 | 0 | 0 | 0 |
| A-3 | 10 | B-4 | 100 | 5 | 5 | 5 | 5 | 0 | 0 | 0 | 0 | 0 |
| | 10 | | 50 | 5 | 5 | 5 | 5 | 0 | 0 | 0 | 0 | 0 |
| | 5 | | 100 | 5 | 5 | 5 | 5 | 0 | 0 | 0 | 0 | 0 |
| | 5 | | 50 | 5 | 5 | 5 | 5 | 0 | 0 | 0 | 0 | 0 |
| A-4 | 10 | B-1 | 100 | 5 | 5 | 5 | 5 | 0 | 0 | 0 | 0 | 0 |
| | 10 | | 50 | 5 | 5 | 5 | 5 | 0 | 0 | 0 | 0 | 0 |
| | 5 | | 100 | 5 | 5 | 5 | 5 | 0 | 0 | 0 | 0 | 0 |
| | 5 | | 50 | 5 | 5 | 5 | 5 | 0 | 0 | 0 | 0 | 0 |
| A-5 | 10 | B-1 | 100 | 5 | 5 | 5 | 5 | 0 | 0 | 0 | 0 | 0 |
| | 10 | | 50 | 5 | 5 | 5 | 5 | 0 | 0 | 0 | 0 | 0 |
| | 5 | | 100 | 5 | 5 | 5 | 5 | 0 | 0 | 0 | 0 | 0 |
| | 5 | | 50 | 5 | 5 | 5 | 5 | 0 | 0 | 0 | 0 | 0 |
| A-5 | 10 | B-4 | 100 | 5 | 5 | 5 | 5 | 0 | 0 | 0 | 0 | 0 |
| | 10 | | 50 | 5 | 5 | 5 | 5 | 0 | 0 | 0 | 0 | 0 |
| | 5 | | 100 | 5 | 5 | 5 | 5 | 0 | 0 | 0 | 0 | 0 |
| | 5 | | 50 | 5 | 5 | 5 | 5 | 0 | 0 | 0 | 0 | 0 |
| A-6 | 10 | B-4 | 100 | 5 | 5 | 5 | 5 | 0 | 0 | 0 | 0 | 0 |
| | 10 | | 50 | 5 | 5 | 5 | 5 | 0 | 0 | 0 | 0 | 0 |
| | 5 | | 100 | 5 | 5 | 5 | 5 | 0 | 0 | 0 | 0 | 0 |
| | 5 | | 50 | 5 | 5 | 5 | 5 | 0 | 0 | 0 | 0 | 0 |
| A-7 | 10 | B-1 | 100 | 5 | 5 | 5 | 5 | 0 | 0 | 0 | 0 | 0 |
| | 10 | | 50 | 5 | 5 | 5 | 5 | 0 | 0 | 0 | 0 | 0 |
| | 5 | | 100 | 5 | 5 | 5 | 5 | 0 | 0 | 0 | 0 | 0 |
| | 5 | | 50 | 5 | 5 | 5 | 5 | 0 | 0 | 0 | 0 | 0 |
| A-7 | 10 | B-4 | 100 | 5 | 5 | 5 | 5 | 0 | 0 | 0 | 0 | 0 |
| | 10 | | 50 | 5 | 5 | 5 | 5 | 0 | 0 | 0 | 0 | 0 |
| | 5 | | 100 | 5 | 5 | 5 | 5 | 0 | 0 | 0 | 0 | 0 |
| | 5 | | 50 | 5 | 5 | 5 | 5 | 0 | 0 | 0 | 0 | 0 |

Some data were extracted from the results shown in Table 4 and the synergistic effect of the triazine derivative and the urea type herbicide was examined on Galium aparine L., and Viola arvensis according to the following method.

$$Q_E = Q_a + Q_b - \frac{Q_a \cdot Q_b}{100}$$

$Q_a$ : found data (%) of herbicidal rate when treated at a dosage corresponding to a g/10 ares using the triazine derivative alone as active ingredient

$Q_b$ : found data (%) of herbicidal rate when treated at a dosage corresponding to b g/10 ares using the urea derivative alone as active ingredient

$Q_E$ : expected value

[Limpel, L.E., P.H. Schuldt and D. Lamont, Proc. NEWCC, 16, 48-53 (1962)]

Herein, when the found data (herbicidal rate) of the herbicidal obtained by mixing the triazine derivative and the urea type herbicide is larger than $Q_E$ , it can be said that the herbicidal activity is synergistic. The results are shown in Table 6.

Table 6

| Triazine derivative | | Urea Type herbicide | | Herbicidal Effect | | | |
|---|---|---|---|---|---|---|---|
| Kind | Dosage (g/10a) | Kind | Dosage (g/10a) | Herbicidal Rate of Galium aparine L. (%) | Expected Value ($Q_E$)(%) | Herbicidal Rate of Viola arvensis (%) | Expected Value ($Q_E$)(%) |
| - | - | B-2 | 200 | 28 | - | 36 | - |
| - | - | B-3 | 150 | 18 | - | 17 | - |
| - | - | B-5 | 200 | 17 | - | 34 | - |
| A-1 | 10 | - | - | 39 | - | 48 | - |
| A-1 | 10 | B-2 | 200 | 91 | 56 | 94 | 67 |
| A-1 | 10 | - | - | 39 | - | 48 | - |
| A-1 | 10 | B-3 | 150 | 90 | 50 | 92 | 57 |
| A-2 | 10 | - | - | 68 | - | 72 | - |
| A-2 | 10 | B-2 | 200 | 94 | 77 | 97 | 82 |
| A-2 | 10 | - | - | 68 | - | 72 | - |
| A-2 | 10 | B-3 | 150 | 93 | 74 | 94 | 77 |
| A-2 | 10 | - | - | 68 | - | 72 | - |
| A-2 | 10 | B-5 | 200 | 92 | 73 | 97 | 82 |
| A-3 | 10 | - | - | 54 | - | 56 | - |
| A-3 | 10 | B-2 | 200 | 90 | 67 | 95 | 72 |
| A-3 | 10 | - | - | 54 | - | 56 | - |
| A-3 | 10 | B-3 | 150 | 90 | 62 | 92 | 63 |
| A-4 | 10 | - | - | 58 | - | 70 | - |
| A-4 | 10 | B-2 | 200 | 93 | 70 | 97 | 81 |
| A-4 | 10 | - | - | 58 | - | 70 | - |
| A-4 | 10 | B-3 | 150 | 92 | 66 | 93 | 75 |
| A-5 | 10 | - | - | 68 | - | 74 | - |
| A-5 | 10 | B-2 | 200 | 94 | 77 | 100 | 83 |
| A-5 | 10 | - | - | 68 | - | 74 | - |
| A-5 | 10 | B-3 | 150 | 97 | 74 | 94 | 78 |
| A-5 | 10 | - | - | 68 | - | 74 | - |
| A-5 | 10 | B-5 | 200 | 95 | 73 | 100 | 83 |
| A-6 | 10 | - | - | 62 | - | 72 | - |
| A-6 | 10 | B-2 | 200 | 93 | 73 | 100 | 82 |
| A-6 | 10 | - | - | 62 | - | 72 | - |
| A-6 | 10 | B-3 | 150 | 92 | 69 | 94 | 77 |
| A-7 | 10 | - | - | 74 | - | 78 | - |
| A-7 | 10 | B-2 | 200 | 98 | 81 | 100 | 86 |
| A-7 | 10 | - | - | 74 | - | 78 | - |
| A-7 | 10 | B-3 | 150 | 94 | 79 | 98 | 82 |
| A-7 | 10 | - | - | 74 | - | 78 | - |
| A-7 | 10 | B-5 | 200 | 92 | 78 | 97 | 85 |

Example 4 Field test (pre-emergence treatment test)

Test zones having each a plot of 2 $m^2$ were prepared and weed seeds of Alopecurus myosuroides, Galium aparine L., Stellaria media, Viola arvensis, Matricaria inodora, Veronica hederifolia, Papaver rhoeas and Aphanes arvensis and crop seeds of wheat and barley were simultaneously planted.

At the pre-emergence timing of wheat, barley and weeds, a given amount of a dilution of the herbicide obtained in Formulation Example 6 was uniformly sprayed over the soil surface at a spray volume corresponding to 20 liters/10 ares.

The test was carried out by 3 replications.

The weeds on the ground which survived 60 days after spraying of the chemical were cut out and their raw weight were measured. According to the following equation, a weed controlling rate was determined as

an average of the 3 replicates.

$$\text{Percent of weed control (\%)} = \left(1 - \frac{\text{Weight of survived weed on the ground in the treated plot}}{\text{Weight of survived weed on the ground in the untreated plot}}\right) \times 100$$

With respect to wheat and barley, their raw weights on the ground were measured also as in weeds and the degree of crop injury (inhibition rate) was determined. The results are shown in Table 7.

Table 7

| Active ingredient | A-2 + B-2 | | A-2 + B-3 | | A-7 + B-2 | | A-7 + B-3 | |
|---|---|---|---|---|---|---|---|---|
| Dosage (g/10a) | 20+300 | 10+300 | 20+200 | 10+200 | 20+300 | 10+200 | 20+300 | 10+200 |
| % of Weed Control | | | | | | | | |
| Alopecurus myosuroides | 100 | 100 | 100 | 100 | 100 | 100 | 100 | 100 |
| Galium aparine L. | 100 | 100 | 100 | 100 | 100 | 100 | 100 | 100 |
| Stellaria media | 100 | 100 | 100 | 100 | 100 | 100 | 100 | 100 |
| Viola arvensis | 100 | 100 | 100 | 100 | 100 | 100 | 100 | 100 |
| Matricaria inodora | 100 | 100 | 100 | 100 | 100 | 100 | 100 | 100 |
| Veronica hederifolia | 100 | 100 | 100 | 100 | 100 | 100 | 100 | 100 |
| Papaver rhoeas | 100 | 100 | 100 | 100 | 100 | 100 | 100 | 100 |
| Aphanes arvensis | 100 | 100 | 100 | 100 | 100 | 100 | 100 | 100 |
| Crop Injury | | | | | | | | |
| Wheat | 0 | 0 | 0 | 0 | 0 | 0 | 0 | 0 |
| Barley | 0 | 0 | 0 | 0 | 0 | 0 | 0 | 0 |

Example 5 Field test (post-emergence treatment test)

Test zones having each plot of 2 $m^2$ were prepared and weed seeds of Alopecurus myosuroides, Galium aparine L., Stellaria media, Viola arvensis, Matricaria inodora, Veronica hederifolia, Papaver rhoeas and Aphanes arvensis and crop seeds of wheat and barley were simultaneously planted.

When weeds grew at the 2-3 leaf stage and wheat and barley reached the 3-leaf stage, a given amount of a dilution of the herbicide obtained in Formulation Example 6 was uniformly sprayed onto the foliage at a spray volume corresponding to 20 liters/10 ares.

The percent of weed control and the degree of crop injury were determined 30 days after spraying the chemical in a manner similar to Example 4. The results are shown in Table 8.

Table 8

| Active ingredient | A-2 + B-2 | | A-2 + B-3 | | A-7 + B-2 | | A-7 + B-3 | |
|---|---|---|---|---|---|---|---|---|
| Dosage (g/10a) | 20+300 | 10+300 | 20+200 | 10+200 | 20+300 | 10+300 | 20+200 | 10+200 |
| % of Weed Control | | | | | | | | |
| Alopecurus myosuroides | 100 | 100 | 100 | 100 | 100 | 100 | 100 | 100 |
| Galium aparine L. | 100 | 100 | 100 | 100 | 100 | 100 | 100 | 100 |
| Stellaria media | 100 | 100 | 100 | 100 | 100 | 100 | 100 | 100 |
| Viola arvensis | 100 | 100 | 100 | 100 | 100 | 100 | 100 | 100 |
| Matricaria inodora | 100 | 100 | 100 | 100 | 100 | 100 | 100 | 100 |
| Veronica hederifolia | 100 | 100 | 100 | 100 | 100 | 100 | 100 | 100 |
| Papaver rhoeas | 100 | 100 | 100 | 100 | 100 | 100 | 100 | 100 |
| Aphanes arvensis | 100 | 100 | 100 | 100 | 100 | 100 | 100 | 100 |
| Crop Injury | | | | | | | | |
| Wheat | 0 | 0 | 0 | 0 | 0 | 0 | 0 | 0 |
| Barley | 0 | 0 | 0 | 0 | 0 | 0 | 0 | 0 |

By the synergistic effect of the triazine derivative and urea type herbicide as active ingredient, the herbicidal composition of the present invention show a high herbicidal effect at a low dosage and also have a wide range of herbicidal spectrum. Further when the composition is used as herbicide for field crops, the composition has flexibility of treatment to exhibit effectiveness, as compared to in conventional herbicides for field crops. The composition also shows a high herbicidal activity even against troublesome weeds both by treatment to the soil at the pre- or post-emergence of weeds and by treatment to the foliage at the post-emergence of weeds. In addition, no crop injury is caused. In particular, the effect is markedly high in treatment to the soil or foliage treatment in fields where Gramineae crops grow.

While the invention has been described in detail and with reference to specific embodiments thereof, it is apparent to one skilled in the art that various changes and modifications can be made therein without departing from the spirit and the scope of the present invention.

## Claims

1. A herbicidal composition comprising as active ingredients a triazine derivative represented by general formula [I]:

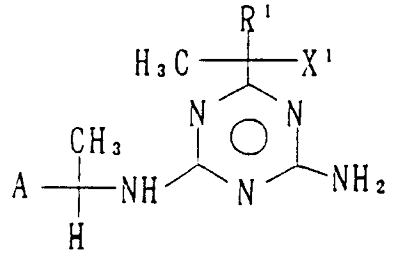

... [I]

wherein A represents

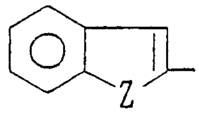

wherein Z represents oxygen atom or sulfur atom , or

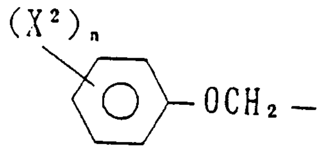

wherein $X^2$ represents methyl group or fluorine atom and n represents 0 or an integer of 1 or 2 ; $R^1$ represents hydrogen atom or methyl group; and $X^1$ represents fluorine atom or chlorine atom] and an urea type herbicide represented by general formula [II]:

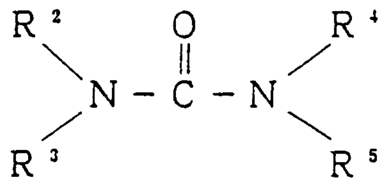

... [II]

wherein $R^2$ represents a benzene ring or an aromatic heterocyclic group which may optionally be substituted, $R^3$ represents a hydrogen atom or a straight or branched alkyl group having 1 to 6 carbon atoms, $R^4$ represents a straight or branched alkyl group having 1 to 6 carbon atoms, $R^5$ represents a hydrogen atom or a straight or branched alkyl group or a branched alkoxy group, having 1 to 6 carbon atoms .

**2.** The herbicidal composition as claimed in claim 1,wherein the triazine derivative represented by general formula [I] is a triazine derivative selected from the group consisting of 2-amino-4-[1-(benzofuran-2'-yl)-ethylamino]-6-(α -fluoro,α-methylethyl)-s-triazine, 2-amino-4-[1-(benzofuran-2'-yl)ethylamino]-6-(α-fluoroethyl)-s-triazine, 2-amino-4-[1-(benzothiophen-2'-yl)ethylamino]-6-(α-fluoro,α-methylethyl)-s-triazine, 2-amino-4-(α-fluoro,α-methylethyl)-6-[2-(3'methylphenoxy)-1-methylethylamino ]-s-triazine, 2-amino-4-(α-fluoro,α-methylethyl)-6-[2-(3'fluorophenoxy)-1-methylethylamino]-s-triazine, 2-amino-4-(α-chloro,α-methylethyl)-6-[2-(3',5'-dimethylphenoxy)-1-methylethylamino]-s-triazine and 2-amino-4-( α-fluoro,α-methylethyl)-6-[2-(3',5'-dimethylphenoxy)-1-methylethylamino]-s-triazine.

**3.** The herbicidal composition as claimed in claim 1,wherein the urea type herbicide represented by general formula [II] is an urea type herbicide selected from the group consisting of N'-phenyl-N,N-dimethylurea, N'-(3-trifluoromethylphenyl)-N,N-dimethylurea, N'-(3,4-dichlorophenyl)-N,N-dimethylurea, N'-(3,4-dichlorophenyl-N-methoxy-N-methylurea and N'-2-benzothiazoyl-N',N-dimethylurea.

## Patentansprüche

**1.** Herbizide Zusammensetzung, die als aktive Bestandteile (Wirkstoffe) enthält
ein Triazin-Derivat, dargestellt durch die allgemeine Formel (I):

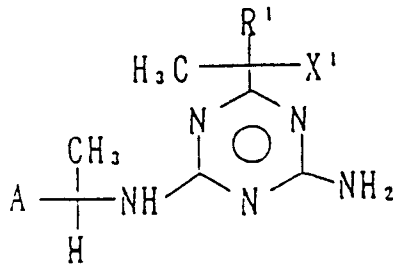

... [I]

worin bedeuten:

A die Formel:

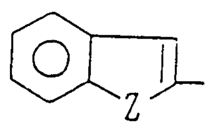

worin Z für ein Sauerstoffatom oder ein Schwefelatom steht, oder die Formel:

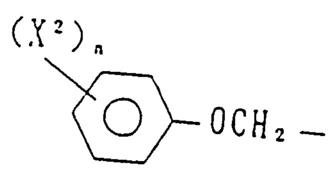

worin $X^2$ steht für eine Methylgruppe oder ein Fluoratom und n steht für 0 oder die ganze Zahl 1 oder 2;

$R^1$ ein Wasserstoffatom oder eine Methylgruppe; und

$X^1$ ein Fluoratom oder ein Chloratom, und

ein Herbizid vom Harnstoff-Typ, dargestellt durch die allgemeine Formel (II):

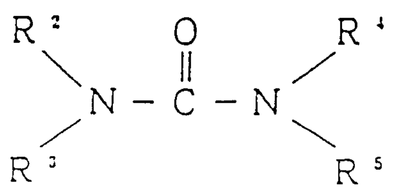

... [II]

worin bedeuten:

$R^2$ einen Benzolring oder eine aromatische heterocyclische Gruppe, die gegebenenfalls substituiert sein kann,

$R^3$ ein Wasserstoffatom oder eine gerade (unverzweigte) oder verzweigte Alkylgruppe mit 1 bis 6 Kohlenstoffatomen,

$R^4$ eine gerade (unverzweigte) oder verzweigte Alkylgruppe mit 1 bis 6 Kohlenstoffatomen

$R^5$ ein Wasserstoffatom oder eine gerade (unverzweigte) oder verzweigte Alkylgruppe oder eine verzweigte Alkoxygruppe mit 1 bis 6 Kohlenstoffatomen.

**2.** Herbizide Zusammensetzung nach Anspruch 1, worin das Triazin-Derivat der allgemeinen Formel (I) ein Triazin-Derivat ist, das ausgewählt wird aus der Gruppe, die besteht aus 2-Amino-4-[1-(benzofuran-2'-yl)ethylamino]-6-(α-fluoro,α-methylethyl)-s-triazin, 2-Amino-4-[1-(benzofuran-2'-yl)ethylamino]-6-(α-fluoroetyhl)-s-triazin, 2-Amino-4-[1-(benzothiophen-2'-yl)ethylamino]-6-(α-fluoro,α-methyletyhl)-s-triazin, 2-Amino-4-(α-fluoro,α-methylethyl)-6-[2-[3'-methylphenoxy)-1-methylethylamino]-s-triazin, 2-Amino-4-(α-fluoro,α-methylethyl)-6-[2-[3'-fluorophenoxy)-1-methylethylamino]-s-triazin, 2-Amino-4-(α-chloro,α-methylethyl)-6-[2-[3',5'-dimethylphenoxy)-1-methylethylamino]-s-triazin und 2-Amino-4-(α-fluoro,α-methylethyl)-6-[2-[3',5'-dimethylphenoxy)-1-methylethylamino]-s-triazin.

**3.** Herbizide Zusammensetzung nach Anspruch 1, worin das Herbizid vom Harnstoff-Typ der allgemeinen Formel (II) ein Herbizid vom Harnstoff-Typ ist, das ausgewählt wird aus der Gruppe, die besteht aus N'-Phenyl-N,N-dimethylharnstoff, N'-(3-Trifluoromethylphenyl)-N,N-dimethylharnstoff, N'-(3,4-Dichlorophenyl)-N,N-dimethylharnstoff, N'-(3,4-Dichlorophenyl-N-methoxy-N-methylharnstoff und N'-2-Benzothiazoyl-N',N-dimethylharnstoff.

## Revendications

**1.** Composition herbicide comprenant, comme ingrédients actifs, un dérivé de triazine représenté par la formule générale [I] :

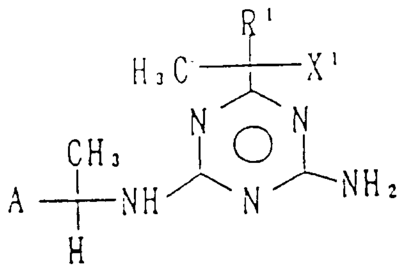

... [I]

dans laquelle A représente

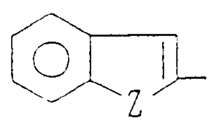

où Z représente un atome d'oxygène ou un atome de soufre, ou

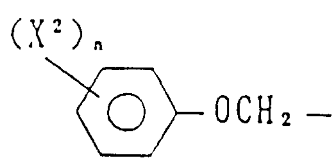

où $X^2$ représente un groupe méthyle ou un atome de fluor et n représente 0 ou le nombre entier 1 ou 2 ; $R^1$ représente un atome d'hydrogène ou un groupe méthyle ; et $X^1$ représente un atome de fluor ou un atome de chlore, et un herbicide du type urée représenté par la formule générale [II] :

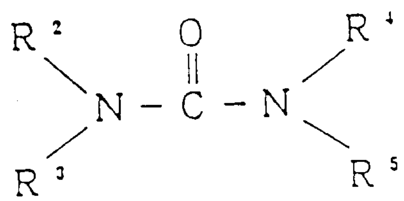

... [II]

dans laquelle $R^2$ représente un noyau benzénique ou un groupe hétérocyclique aromatique qui peut être facultativement substitué, $R^3$ représente un atome d'hydrogène ou un groupe alkyle linéaire ou ramifié ayant 1 à 6 atomes de carbone, $R^4$ représente un groupe alkyle linéaire ou ramifié ayant 1 à 6

atomes de carbone, $R^5$ représente un atome d'hydrogène ou un groupe alkyle linéaire ou ramifié ou un groupe alcoxy ramifié, ayant 1 à 6 atomes de carbone.

**2.** Composition herbicide telle que revendiquée dans la revendication 1, dans laquelle le dérivé de triazine représenté par la formule générale [I] est un dérivé de triazine choisi dans le groupe formé par la 2-amino-4-[1-(benzofuranne-2'-yl)éthylamino]-6-(α-fluoro-α-méthyléthyl)-*s*-triazine, la 2-amino-4-[1-(benzofuranne-2'-yl)éthylamino]-6-(α-fluoroéthyl)-*s*-triazine, la 2-amino-4-[1-(benzothiophène-2'-yl)éthylamino]-6-(α-fluoro-α-méthyléthyl)-*s*-triazine, la 2-amino-4-(α-fluoro-α-méthyléthyl)-6-[2-(3'-méthylphénoxy)-1-méthyléthylamino]-*s*-triazine, la 2-amino-4-(α-fluoro-α-méthyléthyl)-6-[2-(3'-fluorophénoxy)-1-méthyléthylamino]-*s*-triazine, la 2-amino-4-(α-chloro-α-méthyléthyl)-6-[2-(3',5'-diméthylphénoxy)-1-méthyléthylamino]-*s*-triazine et la 2-amino-4-(α-fluoro-α-méthyléthyl)-6-[2-(3',5'-diméthylphénoxy)-1-méthyléthylamino]-*s*-triazine.

**3.** La composition herbicide telle que revendiquée dans la revendication 1, dans laquelle l'herbicide du type urée représenté par la formule générale [II] est un herbicide du type urée choisi dans le groupe formé par la N'-phényl-N,N-diméthylurée, la N'-(3-trifluorométhylphényl)-N,N-diméthylurée, la N'-(3,4-dichlorophényl)-N,N-diméthylurée, la N'-(3,4-dichlorophényl)-N-méthoxy-N-méthylurée et la N'-2-benzothiazolyl-N',N-diméthylurée.